# EUROPEAN PATENT SPECIFICATION

(11) **EP 3 907 437 B1**
(45) Date of publication and mention of the grant of the patent: **12.04.2023**
(21) Application number: 21171862.2
(22) Date of filing: 03.05.2021
(51) Int. Cl.: F24F 8/10, F24F 8/108, F24F 8/80, F24F 13/14, F24F 11/79

(54) **AIR CLEANER**
LUFTREINIGER
ÉPURATEUR D'AIR

(30) Priority: 04.05.2020 KR 20200053265
(43) Date of publication of application: 10.11.2021
(73) Proprietor: LG Electronics Inc., Seoul 07336 (KR)
(72) Inventor: KIM, Yeonghyeon, 08592 Seoul (KR); PARK, Naehyun, 08592 Seoul (KR); YOON, Juhyup, 08592 Seoul (KR); LEE, Jongsu, 08592 Seoul (KR); LEE, Nuree, 08592 Seoul (KR)
(74) Representative: Vossius & Partner Patentanwälte Rechtsanwälte mbB

(56) References cited:
- EP-A1- 3 211 347
- EP-A2- 2 778 547
- KR-A- 20180 056 615
- KR-A- 20180 068 650
- KR-A- 20190 029 478
- US-A1- 2020 063 991

## Description

The present disclosure relates to an air cleaner, and more particularly, to an air cleaner that controls the flow direction of air discharged through an annular outlet.

An air cleaner is an apparatus that reduces dust or bacteria in the air in a corresponding space by filtering and discharging the air inside a certain space. The air cleaner filters foreign substances through the air flow in a corresponding space and discharges air from which foreign substances have been removed.

Korean Patent Publication No. KR10-2017-0140578 discloses an air cleaner that is disposed in a vertical direction and filters a large amount of air. In the air cleaner disclosed in the above document, in the case of the air cleaner disposed below, purified air may be uniformly discharged in a radial direction through an annular air flow path. In this case, the purified air may be discharged to the wall or corner space of an indoor space that is in a direction excluding the direction toward the indoor space.

In the case of discharging a uniform wind direction in all directions, the purified air may be discharged to an unnecessary space according to the disposition of the air cleaner. Therefore, it is necessary to adjust the wind direction of the air discharged from the air cleaner disposed below.

The present invention has been made in view of the above problems, and provides an air purifier that flows filtered air in a direction desired by a user.

The present invention further provides an air purifier capable of controlling the detailed wind direction of air discharged upward from an annular flow path.

In accordance with an aspect of the present invention, an air cleaner includes a housing which forms an outer shape and forms a suction port in a lower circumferential surface; a filter which is disposed inside the housing and removes foreign substances in an air flowing into the suction port; a cover which is disposed above the filter and forms a discharge port opened upward; and a fan which is disposed between the suction port and the discharge port, rotates based on a first rotation axis formed in a vertical direction, and flows air inside the housing from the suction port to the discharge port. A flow path body is disposed between the fan and the cover and forms an annular flow path through which air flows. There is further provided a first guider which comprises a plurality of first vanes that are disposed in a flow path formed inside the flow path body and disposed substantially perpendicular to the first rotation axis, and changes an arrangement of the plurality of first vanes with respect to a second rotation axis perpendicular to the first rotation axis. This arrangement of the first vanes may be a sloped angle of the first vanes with respect to the second rotation axis. There is further provided a second guider which comprises a plurality of second vanes that are disposed in the flow path formed inside the flow path body and substantially perpendicular to the first rotation axis and obliquely disposed with respect to the first vanes, and is configured to change an arrangement of the second vanes with respect to a third rotation axis. This arrangement of the second vanes may be a sloped angle of the second vanes with respect to the third rotation axis. The third rotation axis is perpendicular to the first rotation axis and inclined to (i.e. not in parallel with) the second rotation axis, thereby adjusting the wind direction of the air discharged through the annular flow path.

The air cleaner further includes a partition plate for guiding air flowing upward through the discharge port to the outside in a radial direction, so that air discharged upward can be guided in the radial direction.

The air partition plate is extended roundly from an upper side of the discharge cover toward an upward direction, thereby smoothing the airflow in the radial direction.

The plurality of first vanes are disposed parallel to the second rotation axis. The plurality of second vanes are disposed parallel to the third rotation axis. The first vanes may form an air flow in a direction perpendicular to the second rotation axis. The second vanes may form an air flow in a direction perpendicular to the third rotation axis.

The second rotation axis and the third rotation axis are disposed substantially perpendicular to each other. The first vanes and the second vanes are disposed substantially perpendicular to each other. Thus, air flowing upward can be guided in four different directions perpendicular to each other or in a direction between them.

The first vanes and the second vanes are formed to have a certain height in the vertical direction. Thus, when the arrangement of at least one of the first vanes and the second vanes is changed, the wind direction of the air flowing upward can be adjusted.

Each of the plurality of first vanes is separated apart in a direction in which the third rotation axis is formed. Each of the plurality of second vanes is separated apart from each other in a direction in which the second rotation axis is formed.

The flow path body includes: a cylindrical outer body that forms an outer shape of the air cleaner; and an inner body that is separated apart into the outer body and forms an annular flow path together with the outer body. The first guider and the second guider are separated apart from each other in a vertical direction between the outer body and the inner body. Thus, inside the annular flow path, the first guider and the second guider may guide air in different directions.

The air cleaner further include a first motor which is disposed in a space formed inside the inner body and changes an arrangement of the first guide with respect to the second rotation axis; and a second motor which is disposed in a space formed inside the inner body and changes an arrangement of the second guider with respect to the third rotation axis. Thus, the arrangement of the first guider and the second guider can be changed.

The first guider includes a first outer ring; a first inner ring which is disposed inside the first outer ring, and has a smaller radius than the first outer ring; and a plurality of first vanes which are disposed between the first outer ring and the first inner ring in parallel with the second rotation axis, and have a certain height in a vertical direction. There is further provided the second guider which includes: a second outer ring; a second inner ring which is disposed inside the second outer ring, and has a smaller radius than the second outer ring; and a plurality of second vanes which are disposed between the second outer ring and the second inner ring in parallel with the third rotation axis, and have a certain height in a vertical direction. The first vanes and the second vanes can guide the wind direction of the air flowing through the flow path.

Each of the first inner ring and the second inner ring is separated apart from the inner body at a certain interval. Thus, the arrangement of a first wind direction guide member and a second wind direction guide member inside the flow path may be changed.

In detail, a distance by which each of the first inner ring and the second inner ring is separated apart from the inner body is formed to be larger than a distance by which each of the first outer ring and the second outer ring is separated apart from the outer body. Thus, the arrangement of the first wind direction guide member and the second wind direction guide member inside the flow path may be changed based on each of the second rotation axis and the third rotation axis.

A height of the first outer ring formed in a vertical direction is formed to be shorter than a height of the first vane formed in a vertical direction. Thus, the first outer ring may be disposed so as not to contact the outer body, and an area in which the first vane guides air may be enlarged.

In addition, an air cleaner includes: a first air blower which sucks air from a circumferential surface and flows the air upward; a second air blower which is disposed above the first air blower, and sucks air from a circumferential surface and flows the air upward; and a partition plate which separates the second air blower to an upper side of the first air blower and guides the air flowing upward from the first air blower to the outside in a radial direction, wherein the first air blower includes: a housing which forms an outer shape and forms a suction port in a lower circumferential surface; a filter which is disposed inside the housing and removes foreign substances in an air flowing into the suction port; a cover which is disposed above the filter and forms a discharge port opened upward; a fan which is disposed between the suction port and the discharge port, rotates based on a first rotation axis formed in a vertical direction, and flows air inside the housing from the suction port to the discharge port; a flow path body which forms an annular flow path for guiding the air flowing upward through the fan to the discharge port; a first guider which comprises a plurality of first vanes that are disposed in a flow path formed inside the flow path body and disposed perpendicular to the first rotation axis, and changes an arrangement of the plurality of first vanes based on a second rotation axis perpendicular to the first rotation axis; and a second guider comprises a plurality of second vanes that are disposed in the flow path formed inside the flow path body and perpendicular to the first rotation axis and obliquely disposed in the first vane, and changes an arrangement of the second vane based on a third rotation axis that is perpendicular to the second rotation axis and inclined to the third rotation axis, thereby adjusting the wind direction of the air flowing from the first air blower to the lower side of the second air blower.

The partition plate includes a first partition plate extended roundly upward from an upper side of the discharge cover, and a second partition plate extended from an upper side of the first partition plate to the second air blower, so that air flowing upward may be discharged in a radial direction by the first plate.

Details of other embodiments are contained in the detailed description and drawings.

### BRIEF DESCRIPTION OF THE DRAWINGS

The above and other objects, features and advantages of the present disclosure will be more apparent from the following detailed description in conjunction with the accompanying drawings, in which:
FIG. 1 is a perspective view of an air cleaner according to an embodiment of the present invention;
FIG. 2 is a cross-sectional view of an air cleaner according to an embodiment of the present invention;
FIG. 3 is an enlarged view of A of FIG. 2;
FIG. 4 is a schematic top perspective view of a guide part according to an embodiment of the present invention;
FIG. 5 is a bottom perspective view of a guide part according to an embodiment of the present invention;
FIG. 6 is a plan view of a guide part according to an embodiment of the present invention;
FIG. 7A is a cross-sectional view taken along line X-X' of FIG. 6;
FIG. 7B is a cross-sectional view taken along line Y-Y' of FIG. 6;
FIG. 8A is a view showing a state in which the arrangement of a second guider is changed in a guide part of FIG. 7A; and
FIG. 8B is a view showing a state in which the arrangement of a first guider is changed in a guide part of FIG. 7B.

Advantages and features of the present invention, and a method of achieving them will clearly comprehended with reference to the embodiments described below in detail together with the accompanying drawings. However, the present invention is not limited to the embodiments disclosed below, but may be implemented in a variety of different forms as long as within the scope of the claims. The same reference numerals refer to the same elements throughout the specification.

Throughout the present disclosure, the expression 'first, second, ...' is for classification of components, and is irrelevant to the priority or importance of the components. The direction indications of up(U), down(D), left(Le), right(Ri), front(F), and rear(R) shown in the drawings are for convenience of explanation of the invention and do not limit the scope of the invention. Accordingly, when the reference is changed, the above direction may be set differently.

Hereinafter, the present disclosure will be described with reference to the drawings for explaining an air cleaner according to embodiments of the present disclosure.

### <Overall composition>

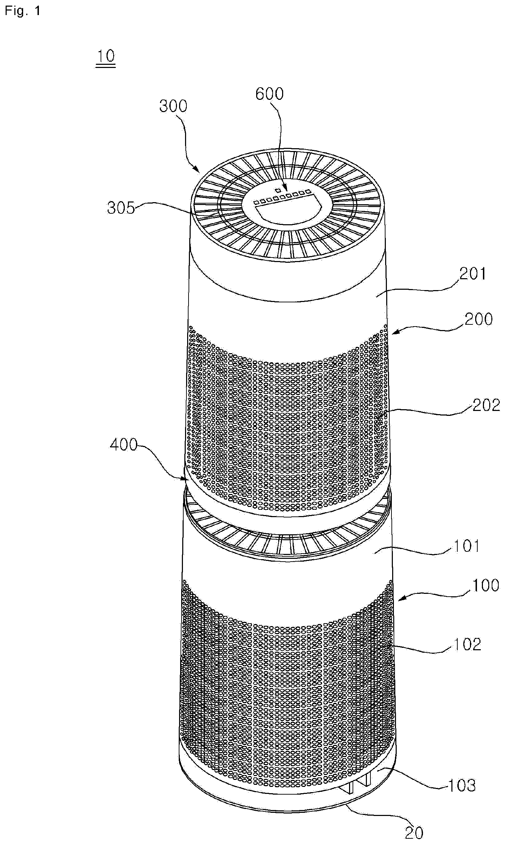

Referring to FIG. 1, an air cleaner 10 according to an embodiment of the present disclosure includes a air blower 100, 200 for generating air flow and a flow conversion device for converting the discharge direction of the air flow generated by the air blower 100, 200. The air blower 100, 200 includes a first air blower 100 for generating a first air flow and a second air blower 200 for generating a second air flow.

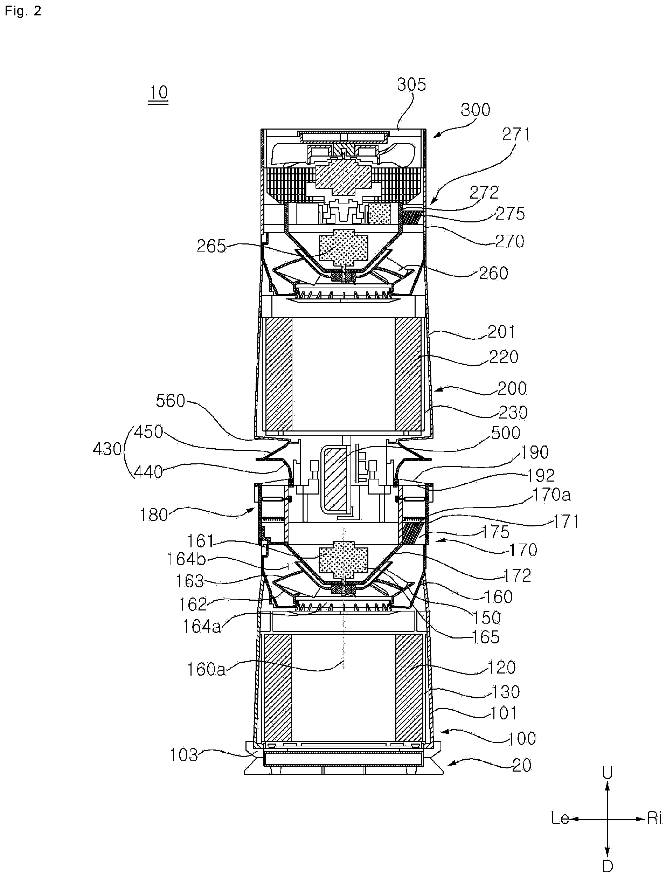

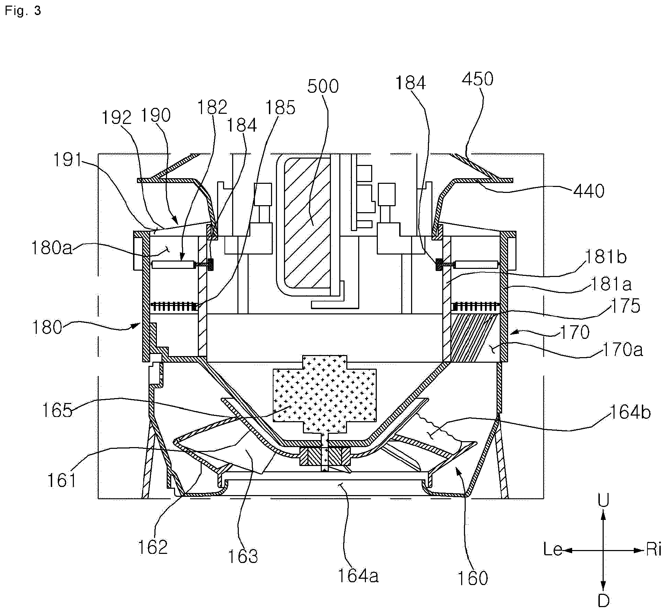

Referring to FIGS. 1 and 2, the first air blower 100 and the second air blower 200 may be disposed in a vertical direction. The vertical direction means a direction which the arrows "U" and "D" at the right bottom side of figures 2 and 3 indicate, i.e. a direction along which the air blower 202 stands, or in which gravity force is applied. The second air blower 200 may be disposed above the first air blower 100.

The air cleaner 10 includes a housing 101, 201 that forms an outer shape. The housing 101, 201 includes a first housing 101 forming the outer shape of the first air blower 100 and a second housing 201 forming the outer shape of the second air blower 200.

The first housing 101 may have a cylindrical shape. The upper portion of the first housing 101 may be configured to have a smaller diameter than the lower portion.

In the first housing 101, a first suction port 102 through which air is sucked is formed. The first suction port 102 communicates the inner side and the outer side of the first housing 101. A plurality of first suction ports 102 are formed.

The plurality of first suction ports 102 are formed evenly in the circumferential direction along the outer circumferential surface of the first housing 101 so that air can be sucked in any direction based on the first housing 101. Referring to FIG. 1, air may be sucked in a 360-degree direction based on a center line in the vertical direction passing through the inner center of the first housing 101.

As described, the first housing 101 is configured in a cylindrical shape, and a plurality of first suction ports 102 are formed along the outer circumferential surface of the first housing 101, so that the amount of sucked air can be increased.

Referring to FIG. 2, the first air blower 100 further includes a base 20 that is provided below the first housing 101 and disposed on the ground. The base 20 is positioned to be separated downward from the lower end of the first housing 101. A base suction part 103 is formed in a separation space between the first housing 101 and the base 20.

A first cover 190 forming a first discharge port 191 opened upward is disposed in an upper portion of a first air blower 100. The first discharge port 191 may be formed in a ring shape. A first discharge grill 192 formed radially from the first discharge port 191 is disposed in the first cover 190.

The second housing 201 may have a cylindrical shape. In addition, the upper portion of the second housing 201 may be configured to have a smaller diameter than the lower portion. In the second housing 201, a second suction port 202 through which air is sucked is formed. The second suction port 202 includes a through hole formed by penetrating at least a portion of the second housing 201. A plurality of second suction ports 202 are formed.

The plurality of second suction ports 202 are formed evenly in the circumferential direction along the outer circumferential surface of the second housing 201 so that air can be sucked in any direction based on the second housing 201. That is, air may be sucked in a 360-degree direction based on a center line in the vertical direction passing through the inner center of the second housing 201.

The first filter member 120 may have a cylindrical shape having open upper and lower sides. The first air blower 100 further includes a first filter frame 130 that forms a mounting space for the first filter member 120.

In the mounting space, the first filter member 120 may be detachably mounted. The first filter member 120 has a cylindrical shape, and air may be introduced through the outer circumferential surface of the first filter member 120. In the process of passing through the first filter member 120, impurities such as fine dust in the air may be filtered out.

Since the first filter member 120 has a cylindrical shape, air may be introduced from any direction based on the first filter member 120. Accordingly, the area of filtering the air may be increased.

The mounting space may be provided in a cylindrical shape corresponding to the shape of the first filter member 120. The first filter member 120 may be slidably inserted toward the mounting space during a mounting process. On the other hand, the first filter member 120 may be slidably pulled out from the mounting space during a separation process.

Also in a second air blower 200, the second filter member 220 is disposed in the second filter frame 230, and may be described in the same manner as described in the first filter member 120 and the first filter frame 130.

Referring to FIG. 2, the first air blower 100 includes a first housing 150 disposed above the first filter member 120, a first fan 160 disposed rotatably inside the first housing 150, and a first fan motor 165 that rotates the first fan 160.

The first housing 150 forms a circular first suction hole 164a downward and an annular first discharge hole 164b upward. The first fan 160 introduces air in the axial direction and discharges the air upward in the radial direction.

The first fan 160 includes a first hub 161 to which a rotation axis of the first fan motor 165, which is a centrifugal fan motor, is coupled, a first shroud 162 disposed separated apart from the first hub 161, and a plurality of first blades 163 disposed between the first hub 161 and the first shroud 162. The first fan motor 165 may be coupled to an upper side of the first fan 160.

The second air blower 200 includes a second fan 260 which is disposed above the second filter member 220 and forms a flow of air, a second fan motor 265 which rotates the second fan, and a second housing 250 in which the second fan 260 is disposed. The second fan 260, the second fan motor 265, and the second housing 250 have the same configuration as and similar form with the first fan 160, the first fan motor 165, and the first housing 150 described above, and may perform the same function.

The first air blower 100 further includes a first blowing guider 170 which is coupled to an upper side of the first fan 160 and guides the air passing through the first fan 160 upward.

The first blowing guider 170 forms an annular first flow path 170a through which air discharged from the first fan 160 flows.

The first blowing guider 170 includes a first blowing body 171 which has a cylindrical shape forming an outer shape, a bowl-shaped first motor cover 172, which is disposed at the center of the first blowing body 171, into which the first fan motor 165 is inserted, and a plurality of first guide vanes 175 which are separated apart in the circumferential direction in the first flow path 170a formed between the first blowing body 171 and the first motor cover 172.

The first blowing guider 170 has an annular first flow path 170a, which is formed between the first blowing body 171 and the first motor cover 172, through which air discharged from the first fan 160 flows.

The plurality of first guide vanes 175 guide the air discharged from the first fan 160 to the first flow path 170a upward. Each of the plurality of first guide vanes 175 may be formed in a curved plate shape that is erected and disposed to be close to the vertical direction. The first guide vane 175 extends from the outer circumferential surface of the first motor cover 172 to the inner circumferential surface of the first blowing body 171. A plurality of first guide vanes 175 may be disposed to be separated apart. The plurality of first guide vanes 175 serves to guide the air introduced into the first flow path 170a of the first blowing guider 170 through the first fan 160 upward.

The first fan motor 165 may be supported by an upper side of the first motor cover 172. In addition, the rotation axis of the first fan motor 165 extends downward from the first fan motor 165, and may be connected to the first hub 161 by passing through the bottom portion of the first motor cover 172.

The second air blower 200 further includes a second blowing guider 270 which is disposed above the second fan 260 and guides the air passing through the second fan 260 upward. The second blowing guider 270 includes a second blowing body 271 having a cylindrical shape forming an outer shape, a bowl-shaped second motor cover 272, which is disposed in the center of the second blowing body 271, into which the second fan motor 265 is inserted, and a plurality of second guide vanes 275 which are separated apart in the circumferential direction in the second flow path 270a formed between the second blowing body 271 and the second motor cover 272. The second blowing body 271, the second motor cover 272, and the plurality of second guide vanes 275 have the same configuration as and a similar shape with the first blowing body 171, the first motor cover 172, and the plurality of first guide vanes 175, and may perform the same function.

The first air blower 100 includes a guide part 180 which is disposed above the first fan 160 and adjusts a wind direction of air flowing upward by the first fan 160. The specific configuration of the guide part 180 will be described in detail below.

The air cleaner 10 includes a partition plate 430 provided between the first air blower 100 and the second air blower 200. By the partition plate 430, the second air blower 200 may be positioned to be separated upward from the upper side of the first air blower 100.

The partition plate 430 separates or blocks the air flow generated by the first air blower 100 and the air flow generated by the second air blower 200. By the partition plate 430, the first and second air blowers 100 and 200 may be disposed to be separated apart in the vertical direction.

A separation space in which the partition plate 430 is positioned is formed between the first air blower 100 and the second air blower 200.

Referring to FIG. 2, the partition plate 430 includes a first partition plate 440 and a second partition plate 450 disposed above the first partition plate 440. The first partition plate 440 is extended to be rounded upward, and the second partition plate 450 is extended to be rounded downward. The first partition plate 440 extends above the first cover 190. At least a portion of the first partition plate 440 is formed as a curved portion having a certain radius of curvature. Inside the partition plate 430, a PCB device 500 may be disposed.

The first cover 190 of the first air blower 100 is disposed below the partition plate 430, and a support plate 560 of the second air blower 200 is disposed above the partition plate 430.

The second air blower further includes a support plate 560 supporting the second filter member 220 of the second air blower 200. The support plate 560 has an approximately annular shape. The supporting plate 560 is disposed above the second partition plate 450.

The support plate 560 has an annular shape and extends slightly inclined upward with respect to the axial direction from the inner circumferential surface toward the outer circumferential surface.

A flow conversion device 300 may be installed in an upper side of the second air blower 200. Based on the air flow, the air flow path of the second air blower 200 may be in communication with the air flow path of the flow conversion device 300. The air that passed through the second air blower 200 passes through the air flow path of the flow conversion device 300 and may be discharged to the outside through a discharge part 305. The discharge part 305 is formed in an upper end of the flow conversion device 300.

The flow conversion device 300 may be provided to be movable. As shown in FIG. 1, the flow conversion device 300 may be in a lying state or in an inclined erect state (a second position, not shown).

In addition, a display device 600 that displays operation information of the air cleaner 10 is provided in an upper side of the flow conversion device 300. The display device 600 may move together with the flow conversion device 300.

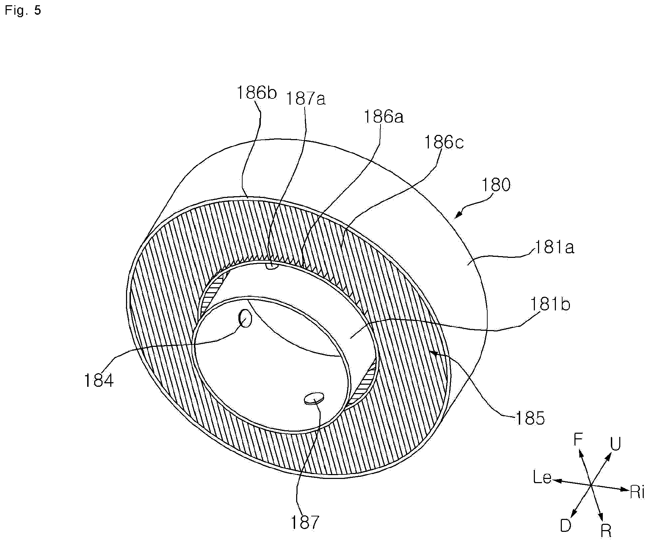

Hereinafter, the arrangement and configuration of the guide part will be described with reference to FIGS. 3 to 8A.

The guide part 180 adjusts the flow direction of the air flowing to the first discharge port 191. The guide part 180 may adjust a flow direction of air flowing to the first partition plate 440 of the partition plate 430.

Referring to FIG. 3, the guide part 180 is disposed in an upper side of the guider 170. The guide part 180 may be disposed in a lower side of the cover 190 to adjust the wind direction of the air discharged to the discharge port 191.

Referring to FIG. 3, the guide part 180 forms an annular flow path 180a that guides air flowing upward through the first fan 160 to the first discharge port 191.

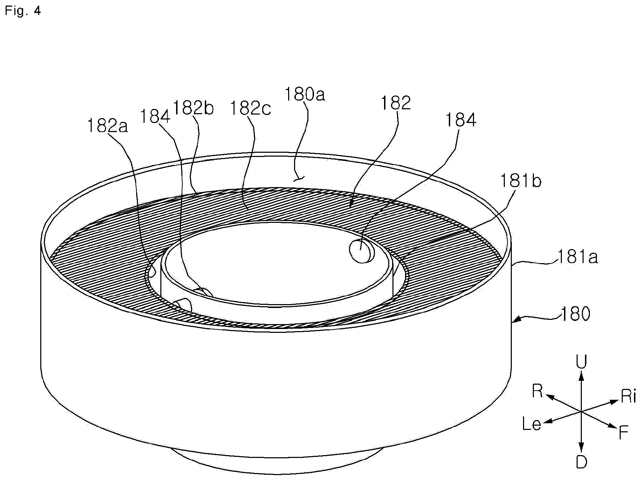

Referring to FIGS. 4 to 5, the guide part 180 includes a flow path body 181a, 181b forming an annular flow path 180a between the first fan 160 and the first cover 190, a first guider 182 which is rotatably disposed in the flow path body 181a, 181b in the flow path 180a, and rotatably disposed in the flow path body 181a, 181b that rotates around a second rotation axis perpendicular to a first rotation axis 160a of the first fan 160, and a second guider 185 which is rotatably disposed in the flow path body 181a, 181b around a third rotation axis 185a formed perpendicular to each of the first rotation axis 160a and the second rotation axis 182a of the first fan 160.

Referring to FIG. 4, the flow path body 181a, 181b includes an outer body 181a having a cylindrical shape that forms an outer shape, and an inner body 181b which is separated inwardly apart from the outer body 181a and forms the outer body 181a and the annular flow path 180a. The inner body 181b has a cylindrical shape having a hollow inside. A first motor 184 for rotating the first guider 182 and a second motor 187 for rotating the second guider 185 are disposed inside the inner body 181b.

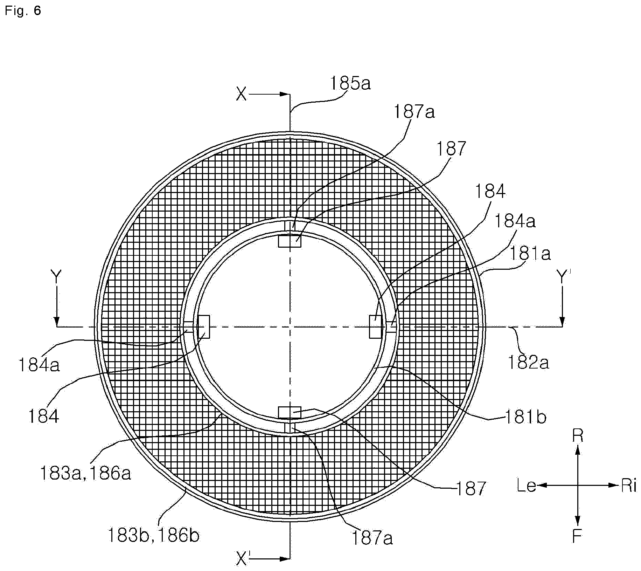

Referring to FIG. 6, the first motor 184 changes the arrangement of the first guider 182 through a first connector 184a. The first connector 184a is disposed on the second rotation axis 182a and connects the first motor 184 and the first guider 182.

Referring to FIG. 6, the second motor 187 changes the arrangement of the second guider 185 through a second connector 187a. The second connector 187a is disposed on the third rotation axis 185a and connects the second motor 187 and the second guider 185.

Referring to FIG. 6, the second rotation axis 182a and the third rotation axis 185a are disposed perpendicular to each other. Referring to FIG. 6, the second rotation axis 182a may be formed in a left-right direction (Ri-Le), and the third rotation axis 185a may be formed in a front-rear direction (F-R). In the above, the front-rear direction (F-R) and the left-right direction (Ri-Le) are used for setting the reference of the second rotation axis 182a and the third rotation axis 185a, and when the reference is changed, the above direction may also be differently set.

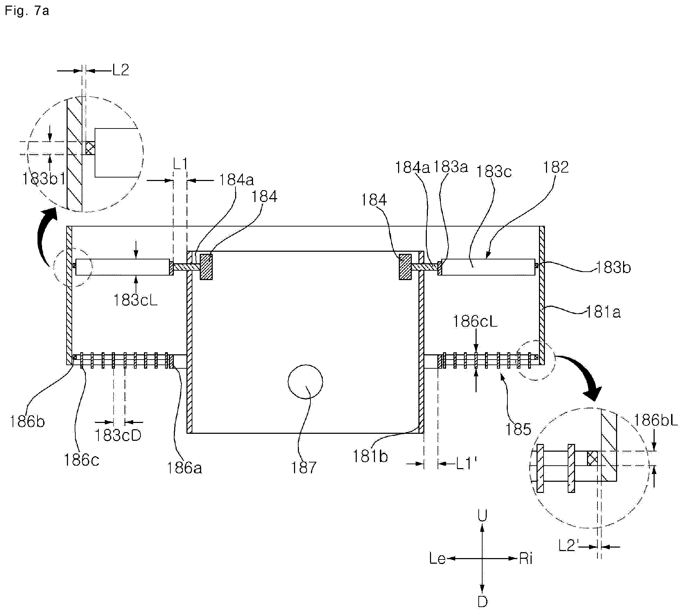

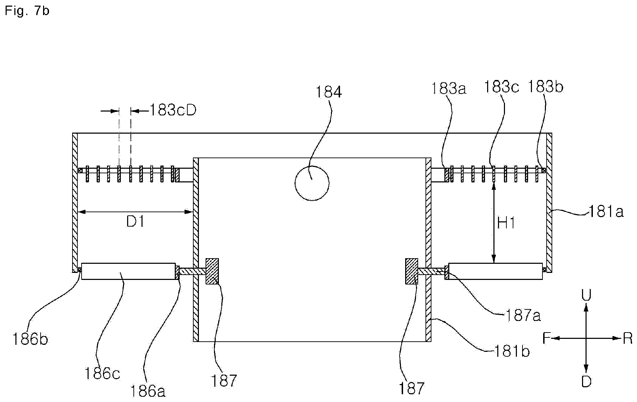

Referring to FIGS. 7A and 7B, the first guider 182 includes a first outer ring 183b, a first inner ring 183a which is disposed inside the first outer ring 183b and has a smaller radius than the first outer ring 183b, and a plurality of first vanes 183c which are disposed in parallel with the second rotation axis 182a between the first outer ring 183b and the first inner ring 183a, and have a given height in the vertical direction.

The first inner ring 183a is disposed to be separated at a certain interval from the inner body 181b so as to secure a rotation range of the first guider 182. The distance L1 by which the first inner ring 183a is separated apart from the inner body 181b is formed larger than the distance L2 by which the first outer ring 183b is separated apart from the outer body 181a.

The first outer ring 183b may have a thin thickness in the vertical direction. The height 183bL of the first outer ring 183b formed in the vertical direction is formed to be shorter than the height 183cL of the first vane 183c formed in the vertical direction.

The plurality of first vanes 183c are disposed at certain intervals in the direction in which the third rotation axis 185a is formed. The plurality of first vanes 183c form a given height in the vertical direction. Accordingly, it is possible to adjust the wind direction of the air flowing through the flow path 180a. The height 183cL of the plurality of first vanes 183c formed in the vertical direction is formed to be greater than the distance 183cD by which each of the plurality of first vanes 183c is separated apart from each other in the direction in which the third rotation axis 185a extends.

Referring to FIGS. 7A and 7B, the second guider 185 includes a second outer ring 186b, a second inner ring 186b which is disposed inside the second outer ring 186b and has a smaller radius than the second outer ring 186b, and a plurality of second vanes 186c which are disposed in parallel with the third rotation axis 185a between the second outer ring 186b and the second inner ring 186a, and have a given height in the vertical direction.

The second inner ring 186a is disposed to be separated at a certain interval from the inner body 181b. The distance L1' by which the second inner ring 186a is separated apart from the inner body 181b is formed larger than the distance L2' by which the second outer ring 186b is separated apart from the outer body 181a.

The height 183bL of the second outer ring 186b formed in the vertical direction is formed to be shorter than the height 183cL of the second vane 186c formed in the vertical direction.

The plurality of second vanes 186c are disposed at certain intervals in the direction in which the second rotation axis 182a is formed. The height 186cL of the plurality of second vanes 186c formed in the vertical direction is greater than the distance 186cD by which each of the plurality of second vanes 186c is separated apart from each other in the direction in which the second rotation axis 182a extends.

The plurality of first vanes 183c and the plurality of second vanes 186c are disposed perpendicular to each other. The first guider 182 and the second guider 185 are separated apart in the vertical direction. The distance H1 by which the first guider 182 and the second guider 185 are separated in the vertical direction is shorter than the distance D1 by which the inner body 181b and the outer body 181a are separated in the radial direction.

### <Operation>

As shown in FIGS. 7A to 7B, when the first guider 182 and the second guider 185 are disposed perpendicular to the wind direction guide right path 180a, the air flowing upward by the first fan 160 flows evenly to the annular first discharge port 191.

That is, the first guider 182 and the second guider 185 guide the air flowing upward in the arrangement as shown in FIGS. 7A to 7B. Air passing through the first guider 182 and the second guider 185 may flow evenly through the annular first discharge port 191.

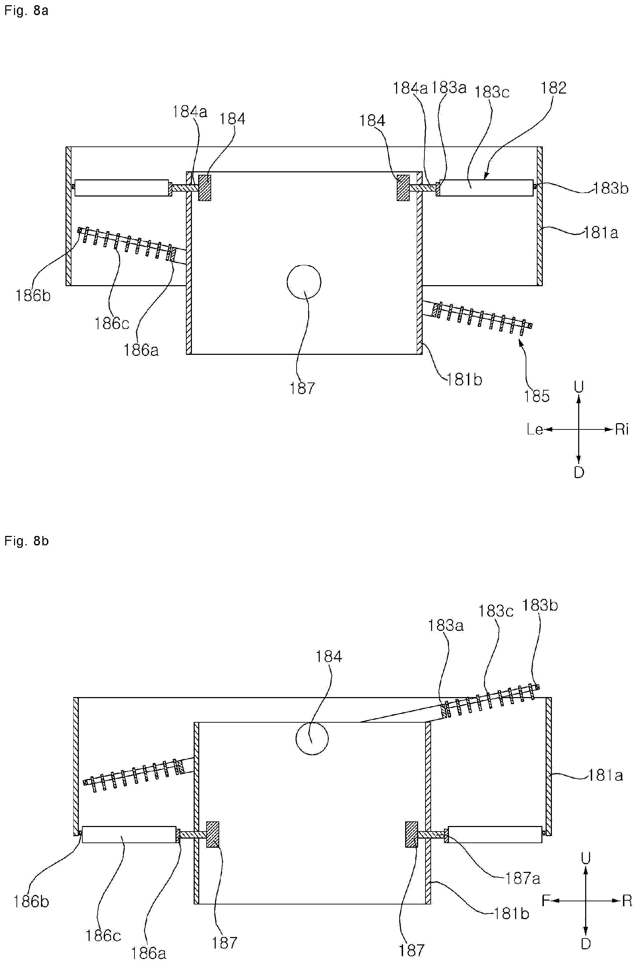

Referring to FIG. 8A, when the second motor 187 operates, the arrangement of the second guider 185 may be changed. The second guider 185 may rotate based on the third rotation axis 185a to guide air flowing upward in the first direction Ri. At this time, the air passing through the first discharge port 191 may have a large amount of air formed in the first direction Ri. The amount of air discharged in the first direction P1 may vary according to the size of the inclination angle formed by the second guider 185 with respect to the second rotation axis 182a.

In addition, due to the operation of the second motor 187, the second guider 185 may be disposed opposite to FIG. 8A. In this case, the second guider 185 may guide the air flowing upward in the second direction Le which is a direction opposite to the first direction Ri.

Referring to FIG. 8B, when the first motor 184 is operated, the arrangement of the first guider 182 may be changed. The first guider 182 may rotate based on the second rotation axis 182a to guide air flowing upward in the third direction F perpendicular to the first direction Ri. In this case, a large amount of air passing through the first discharge port 191 may be formed in the third direction F. The amount of air discharged in the third direction F may vary according to the size of the inclination angle formed by the first guider 182 with respect to the third rotation axis 185a.

In addition, by the operation of the first motor 184, the first guider 182 may be disposed opposite to FIG. 8B. In this case, the first guider 182 may guide the air flowing upward in the fourth direction R which is a direction opposite to the third direction.

In addition, it is also possible for the first motor 184 and the second motor 187 to operate simultaneously. Now, by differentiating the inclination angles at which the first guider 182 and the second guider 185 are disposed, air may be sent also in the direction formed between the first direction Ri, the second direction Le, the third direction F, and the fourth direction R.

According to the air cleaner of the present disclosure, one or more of the following effects are provided.

First, since the first and second guiders are disposed in different directions and rotated in different directions, the wind direction of the air discharged through the annular flow path can be adjusted, thereby quickly increasing the comfort level of an indoor space by flowing filtered air to an area desired by a user.

Second, air discharged through the annular flow path can be discharged in the radial direction through a guide plate. In addition, the first guider and the second guider are disposed to be rotatable in a direction perpendicular to each other, and the first guider and the second guider rotate due to each of the first and second motors. Thus, the wind direction of the air discharged through the annular flow path can be precisely controlled by adjusting the arrangement of the first guide and the arrangement of the second guide, thereby also being able to adjust the wind direction according to the needs of the user or the arrangement of the air purifier.

The effects of the present invention are not limited to the above-mentioned effects, and other effects that are not mentioned will be clearly understood by those skilled in the art from the description of the claims.

## Claims

1. An air cleaner comprising:
a housing (101) which forms an outer shape of the air cleaner and comprises a suction port (102) in a lower circumferential surface thereof;
a filter (120) which is disposed inside the housing (101) and configured to remove foreign substances in air flowing into the suction port (102);
a cover (190) which is disposed above the filter (120) and forms a discharge port (191) opened upward;
a fan (160) which is disposed between the suction port (102) and the discharge port (191), configured to rotate around a first rotation axis (160a) formed in a vertical direction, and configured to allow the air in the housing (101) to flow from the suction port (102) to the discharge port (191);
a flow path body (181a, 181b) which is disposed vertically between the fan (160) and the cover (190), and arranged to form an annular flow path through which air flows; **characterised in that** the air cleaner further comprises :
a first guider (182) which comprises a plurality of first vanes (183c) that are disposed in a flow path formed inside the flow path body (181a, 181b) and disposed substantially perpendicular to the first rotation axis (160a), and is configured to change an arrangement of the plurality of first vanes (183c) with respect to a second rotation axis (182a) substantially perpendicular to the first rotation axis (160a); and
a second guider (185) which comprises a plurality of second vanes (186c) that are disposed in the flow path formed inside the flow path body (181a, 181b) and substantially perpendicular to the first rotation axis (160a) and obliquely disposed relative to the first vanes (183c), and is configured to change an arrangement of the second vanes (186c) with respect to a third rotation axis (185a) that is perpendicular to the first rotation axis (160a) and not in parallel with the second rotation axis (182a).

2. The air cleaner of claim 1, further comprising a partition plate (430) for guiding air flowing upward through the discharge port (191) to the outside in a radial direction.

3. The air cleaner of claim 2, wherein the partition plate (430) is extended roundly from an upper side of the cover (190) toward an upward direction.

4. The air cleaner of any one of claims 1 to 3, wherein the plurality of first vanes (183c) are disposed parallel to the second rotation axis (182a), and the plurality of second vanes (186c) are disposed parallel to the third rotation axis (185a).

5. The air cleaner of any one of claims 1 to 4, wherein the second rotation axis (182a) and the third rotation axis (185a) are disposed substantially perpendicular to each other.

6. The air cleaner of any one of claims 1 to 5, wherein the first vanes (183c) and the second vanes (186c) are disposed perpendicular to each other.

7. The air cleaner of any one of claims 1, wherein the first vanes (183c) and the second vanes (186c) respectively have a certain height in the vertical direction.

8. The air cleaner of any one of claims 1 to 7, wherein each of the plurality of first vanes (183c) is separated apart in a direction in which the third rotation axis (185a) is formed, and
each of the plurality of second vanes (186c) is separated apart from each other in a direction in which the second rotation axis (182a) is formed.

9. The air cleaner of any one of claims 1 to 8, wherein the flow path body (181a, 181b) comprises:
an outer body (181a) that forms the outer shape and has a cylindrical shape; and
an inner body (181b) that is disposed separated apart from the outer body (181a) and forms an annular flow path together with the outer body (181a).

10. The air cleaner of claim 9, wherein the first guider (182) and the second guider (185) are disposed separated apart from each other in a vertical direction between the outer body (181a) and the inner body (181b).

11. The air cleaner of claim 9 or 10, further comprising
a first motor (184) which is disposed in a space formed inside the inner body (181b) and configured to change an arrangement of the first guider (182) with respect to the second rotation axis (182a); and
a second motor (187) which is disposed in a space formed inside the inner body (181b) and configured to changes an arrangement of the second guider (185) with respect to the third rotation axis (185a).

12. The air cleaner of any one of claims 1 to 11, wherein the first guider (182) comprises:
a first outer ring (183b);
a first inner ring (183a) which is disposed inside the first outer ring (183b), and has a smaller radius than the first outer ring (183b); and
a plurality of first vanes (183c) which are disposed between the first outer ring (183b) and the first inner ring (183a) in parallel with the second rotation axis (182a).

13. The air cleaner of claim 12, wherein the second guider (185) comprises:
a second outer ring (186b);
a second inner ring (186a) which is disposed inside the second outer ring (186b), and has a smaller radius than the second outer ring (186b); and
a plurality of second vanes (186c) which are disposed between the second outer ring (186b) and the second inner ring (186a) in parallel with the third rotation axis (185a).

14. The air cleaner of claim 13, insofar as depending on claim 9, wherein each of the first inner ring (183a) and the second inner ring (186a) is separated apart from the inner body (181b) at a certain interval.

15. The air cleaner of claim 13 or 14, a distance by which each of the first inner ring (183a) and the second inner ring (186a) is separated apart from the inner body (181b) is larger than a distance by which each of the first outer ring (183b) and the second outer ring (186b) is separated apart from the outer body (181b), and
wherein, preferably, a height of the first outer ring (183b) formed in a vertical direction is shorter than a height of the first vanes (183c) formed in a vertical direction.

## Patentansprüche

1. Luftreiniger, der aufweist:
ein Gehäuse (101), das eine äußere Form des Luftreinigers bildet und eine Ansaugöffnung (102) in einer unteren Umfangsfläche desselben aufweist;
einen Filter (120), der im Inneren des Gehäuses (101) angeordnet ist und konfiguriert ist, Fremdstoffe in der Luft zu entfernen, die in die Ansaugöffnung (102) strömt;
eine Abdeckung (190), die über dem Filter (120) angeordnet ist und eine nach oben geöffnete Auslassöffnung (191) bildet;
ein Ventilator (160), der zwischen der Ansaugöffnung (102) und der Auslassöffnung (191) angeordnet und konfiguriert ist, sich um eine erste Drehachse (160a) zu drehen, die in einer vertikalen Richtung ausgebildet ist, und der konfiguriert ist, die Luft im Gehäuse (101) von der Ansaugöffnung (102) zur Auslassöffnung (191) strömen zu lassen;
einen Strömungswegkörper (181a, 181b), der vertikal zwischen dem Ventilator (160) und der Abdeckung (190) angeordnet ist und so gestaltet ist, dass er einen ringförmigen Strömungsweg bildet, durch den Luft strömt;
**dadurch gekennzeichnet, dass** der Luftreiniger ferner aufweist:
eine erste Führung (182), die mehrere erste Schaufeln (183c) aufweist, die in einem Strömungsweg angeordnet sind, der innerhalb des Strömungswegkörpers (181a, 181b) ausgebildet ist und im Wesentlichen senkrecht zur ersten Drehachse (160a) angeordnet ist, und die konfiguriert ist, eine Anordnung der mehreren ersten Schaufeln (183c) in Bezug auf eine zweite Drehachse (182a) zu ändern, die im Wesentlichen senkrecht zur ersten Drehachse (160a) verläuft; und
eine zweite Führung (185), die mehrere zweite Schaufeln (186c) aufweist, die in dem innerhalb des Strömungswegkörpers (181a, 181b) ausgebildeten Strömungsweg und im Wesentlichen senkrecht zu der ersten Drehachse (160a) und schräg zu den ersten Schaufeln (183c) angeordnet sind, und die konfiguriert ist, eine Anordnung der zweiten Schaufeln (186c) in Bezug auf eine dritte Drehachse (185a) zu ändern, die senkrecht zur ersten Drehachse (160a) und nicht parallel zur zweiten Drehachse (182a) verläuft.

2. Luftreiniger nach Anspruch 1, ferner mit einer Trennplatte (430) zum Leiten von Luft, die durch die Auslassöffnung (191) nach oben in radialer Richtung nach außen strömt.

3. Luftreiniger nach Anspruch 2, wobei sich die Trennplatte (430) von einer Oberseite der Abdeckung (190) rund nach oben erstreckt.

4. Luftreiniger nach einem der Ansprüche 1 bis 3, wobei die mehreren ersten Schaufeln (183c) parallel zur zweiten Drehachse (182a) angeordnet sind und die mehreren zweiten Schaufeln (186c) parallel zur dritten Drehachse (185a) angeordnet sind.

5. Luftreiniger nach einem der Ansprüche 1 bis 4, wobei die zweite Drehachse (182a) und die dritte Drehachse (185a) im Wesentlichen senkrecht zueinander angeordnet sind.

6. Luftreiniger nach einem der Ansprüche 1 bis 5, wobei die ersten Schaufeln (183c) und die zweiten Schaufeln (186c) senkrecht zueinander angeordnet sind.

7. Luftreiniger nach einem der Ansprüche 1, wobei die ersten Schaufeln (183c) und die zweiten Schaufeln (186c) jeweils eine bestimmte Höhe in vertikaler Richtung aufweisen.

8. Luftreiniger nach einem der Ansprüche 1 bis 7, wobei jede der mehreren ersten Schaufeln (183c) in einer Richtung voneinander getrennt ist, in der die dritte Drehachse (185a) ausgebildet ist, und
jede der mehreren zweiten Schaufeln (186c) in einer Richtung voneinander getrennt ist, in der die zweite Drehachse (182a) ausgebildet ist.

9. Luftreiniger nach einem der Ansprüche 1 bis 8, wobei der Strömungswegkörper (181a, 181b) aufweist:
einen äußeren Körper (181a), der die äußere Form bildet und eine zylindrische Form aufweist; und
einen inneren Körper (181b), der getrennt vom äußeren Körper (181a) angeordnet ist und zusammen mit dem äußeren Körper (181a) einen ringförmigen Strömungsweg bildet.

10. Luftreiniger nach Anspruch 9, wobei die erste Führung (182) und die zweite Führung (185) in vertikaler Richtung zwischen dem äußeren Körper (181a) und dem inneren Körper (181b) voneinander getrennt angeordnet sind.

11. Luftreiniger nach Anspruch 9 oder 10, der ferner aufweist:
einen ersten Motor (184), der in einem innerhalb des inneren Körpers (181b) ausgebildeten Raum angeordnet und konfiguriert ist, eine Anordnung der ersten Führung (182) in Bezug auf die zweite Drehachse (182a) zu ändern; und
einen zweiten Motor (187), der in einem innerhalb des inneren Körpers (181b) ausgebildeten Raum angeordnet und konfiguriert ist, eine Anordnung der zweiten Führung (185) in Bezug auf die dritte Drehachse (185a) zu ändern.

12. Luftreiniger nach einem der Ansprüche 1 bis 11, wobei die erste Führung (182) aufweist:
einen ersten Außenring (183b);
einen ersten Innenring (183a), der innerhalb des ersten Außenrings (183b) angeordnet ist und einen kleineren Radius als der erste Außenring (183b) aufweist; und
mehrere erste Schaufeln (183c), die zwischen dem ersten Außenring (183b) und dem ersten Innenring (183a) parallel zur zweiten Drehachse (182a) angeordnet sind.

13. Luftreiniger nach Anspruch 12, wobei das zweite Führung (185) aufweist:
einen zweiten Außenring (186b);
einen zweiten Innenring (186a), der innerhalb des zweiten Außenrings (186b) angeordnet ist und einen kleineren Radius als der zweite Außenring (186b) aufweist; und
mehrere zweite Schaufeln (186c), die zwischen dem zweiten Außenring (186b) und dem zweiten Innenring (186a) parallel zur dritten Drehachse (185a) angeordnet sind.

14. Luftreiniger nach Anspruch 13, insofern als von Anspruch 9 abhängig, wobei sowohl der erste Innenring (183a) als auch der zweite Innenring (186a) in einem bestimmten Abstand vom Innenkörper (181b) getrennt sind.

15. Luftreiniger nach Anspruch 13 oder 14, wobei ein Abstand, um den jeweils der erste Innenring (183a) und der zweite Innenring (186a) vom Innenkörper (181b) getrennt sind, größer ist als ein Abstand, um jeweils der erste Außenring (183b) und der zweite Außenring (186b) vom Außenkörper (181b) getrennt sind, und
wobei vorzugsweise eine Höhe des ersten Außenrings (183b), der in einer vertikalen Richtung ausgebildet ist, kürzer ist als eine Höhe der ersten Schaufeln (183c), die in einer vertikalen Richtung ausgebildet sind.

## Revendications

1. Purificateur d'air, comprenant :
un boîtier (101) donnant sa forme extérieure au purificateur d'air et présentant un orifice d'aspiration (102) sur sa surface circonférentielle inférieure ;
un filtre (120) disposé à l'intérieur du boîtier (101) et prévu pour éliminer les substances étrangères dans l'air passant dans l'orifice d'aspiration (102) ;
un couvercle (190) disposé au-dessus du filtre (120) et formant un orifice de refoulement (191) ouvert vers le haut ;
un ventilateur (160) disposé entre l'orifice d'aspiration (102) et l'orifice de refoulement (191), prévu pour être rotatif autour d'un premier axe de rotation (160a) formé dans la direction verticale, et prévu pour permettre à l'air dans le boîtier (101) de s'écouler de l'orifice d'aspiration (102) vers l'orifice de refoulement (191) ;
un corps de passage d'écoulement (181a, 181b) disposé verticalement entre le ventilateur (160) et le couvercle (190), et prévu pour former un passage d'écoulement annulaire par où l'air s'écoule ;
**caractérisé en ce que** ledit purificateur d'air comprend en outre :
un premier guidage (182) comprenant une pluralité de premières ailettes (183c) disposées dans un passage d'écoulement formé à l'intérieur du corps de passage d'écoulement (181a, 181b) et disposé sensiblement perpendiculairement au premier axe de rotation (160a), et prévu pour changer un agencement de la pluralité de premières ailettes (183c) par rapport à un deuxième axe de rotation (182a) sensiblement perpendiculaire au premier axe de rotation (160a) ; et
un deuxième guidage (185) comprenant une pluralité de deuxièmes ailettes (186c) disposées dans le passage d'écoulement formé à l'intérieur du corps de passage d'écoulement (181a, 181b) et sensiblement perpendiculaire au premier axe de rotation (160a), et obliquement par rapport aux premières ailettes (183c), et prévu pour changer un agencement des deuxièmes ailettes (186c) par rapport à un troisième axe de rotation (185a) perpendiculaire au premier axe de rotation (160a) et non parallèle au deuxième axe de rotation (182a).

2. Purificateur d'air selon la revendication 1, comprenant en outre une plaque de séparation (430) pour guider l'air s'écoulant vers l'extérieur par le haut par l'orifice de refoulement (191), dans une direction radiale.

3. Purificateur d'air selon la revendication 2, où la plaque de séparation (430) s'étend de manière courbe vers le haut depuis le sommet du couvercle (190).

4. Purificateur d'air selon l'une des revendications 1 à 3, où la pluralité de premières ailettes (183c) sont disposées parallèlement au deuxième axe de rotation (182a), et la pluralité de deuxièmes ailettes (186c) sont disposées parallèlement au troisième axe de rotation (185a).

5. Purificateur d'air selon l'une des revendications 1 à 4, où le deuxième axe de rotation (182a) et le troisième axe de rotation (185a) sont disposés sensiblement perpendiculairement l'un à l'autre.

6. Purificateur d'air selon l'une des revendications 1 à 5, où les premières ailettes (183c) et les deuxièmes ailettes (186c) sont disposées perpendiculairement les unes aux autres.

7. Purificateur d'air selon l'une des revendications 1, où les premières ailettes (183c) et les deuxièmes ailettes (186c) ont respectivement une hauteur définie dans la direction verticale.

8. Purificateur d'air selon l'une des revendications 1 à 7, où les ailettes de la pluralité de premières ailettes (183c) sont séparées les unes des autres dans la direction où est formé le troisième axe de rotation (185a), et
où les ailettes de la pluralité de deuxièmes ailettes (186c) sont séparées les unes des autres dans la direction où est formé le deuxième axe de rotation (182a).

9. Purificateur d'air selon l'une des revendications 1 à 8, où le corps de passage d'écoulement (181a, 181b) comprend :
un corps extérieur (181a) donnant un aspect extérieur et ayant une forme cylindrique ; et
un corps intérieur (181b) disposé séparément du corps extérieur (181a) et formant un passage d'écoulement annulaire avec le corps extérieur (181a).

10. Purificateur d'air selon la revendication 9, où le premier guidage (182) et le deuxième guidage (185) sont disposés séparément l'un de l'autre dans la direction verticale entre le corps extérieur (181a) et le corps intérieur (181b).

11. Purificateur d'air selon la revendication 9 ou la revendication 10, comprenant en outre
un premier moteur (184) disposé dans un espace formé à l'intérieur du corps intérieur (181b) et prévu pour change an arrangement de le premier guidage (182) par rapport à the deuxième axe de rotation (182a) ; et
a deuxième moteur (187) disposé dans un espace formé à l'intérieur du corps intérieur (181b) et prévu pour changer un agencement du deuxième guidage (185) par rapport au troisième axe de rotation (185a).

12. Purificateur d'air selon l'une des revendications 1 à 11, où le premier guidage (182) comprend :
une première bague extérieure (183b) ;
une première bague intérieure (183a) disposée à l'intérieur de la première bague extérieure (183b), et ayant un rayon inférieur à celui de la première bague extérieure (183b) ; et
une pluralité de premières ailettes (183c) disposées entre la première bague extérieure (183b) et la première bague intérieure (183a) parallèlement au deuxième axe de rotation (182a).

13. Purificateur d'air selon la revendication 12, où le deuxième guidage (185) comprend :
une deuxième bague extérieure (186b) ;
une deuxième bague intérieure (186a) disposée à l'intérieur de la deuxième bague extérieure (186b), et ayant un rayon inférieur à celui de la deuxième bague extérieure (186b) ; et
une pluralité de deuxièmes ailettes (186c) disposées entre la deuxième bague extérieure (186b) et la deuxième bague intérieure (186a) parallèlement au troisième axe de rotation (185a).

14. Purificateur d'air selon la revendication 13, si dépendante de la revendication 9, où la première bague intérieure (183a) et la deuxième bague intérieure (186a) sont séparées chacune d'un intervalle défini du corps intérieur (181b).

15. Purificateur d'air selon la revendication 13 ou la revendication 14, où la distance dont la première bague intérieure (183a) et la deuxième bague intérieure (186a) sont séparées chacune du corps intérieur (181b) est supérieure à la distance dont la première bague extérieure (183b) et la deuxième bague extérieure (186b) sont séparées chacune du corps extérieur (181b), et
où la hauteur de la première bague extérieure (183b) formée dans la direction verticale est préférentiellement inférieure à la hauteur des premières ailettes (183c) formées dans la direction verticale.
